# EUROPEAN PATENT APPLICATION

(11) **EP 1 746 321 A1**
(43) Date of publication of application: **24.01.2007**
(21) Application number: 05425532.8
(22) Date of filing: 22.07.2005
(51) Int. Cl.: F16L 3/10

(54) **Fastening device for cylindrical bodies, especially tubes and cables**

(71) Applicant: IMET S.r.l., 50067 Rignano sull'Arno (Firenze) (IT)
(72) Inventor: Tassi, Fernando, 50123 Bagno a Ripoli(FI) (IT)
(74) Representative: Lanzoni, Luciano

(57) **Abstract**

The present invention relates to a fastening device (1) for tubes and cables, comprising a bearing element (2) applicable to a wall, and a locking element (8) able to be engaged to the bearing element (2) to retain a tube or cable in a substantially intermediate position. The locking element (8) can be engaged to the bearing element (2) through anchoring snap means (13) that can be accessed from the outside through functional openings (18) formed in the locking element (8).

## Description

The present invention relates to a fastening device for cylindrical bodies, especially tubes or cables.

The present invention is for use particularly in the building and/or industrial sector where cylindrical bodies such as tubes, channe\ls, cables and the like are to be fixed to walls or any other support able to withstand the load thereof.

As everybody knows, the above mentioned cylindrical bodies are borne by a series of fastening devices suitably spaced apart. Each fastening device comprises a bearing element able to be directly engaged to the support and a locking element able to be engaged to the bearing element in order to retain the cylindrical body to be borne at an intermediate position. Both the bearing element and the locking element are provided with a seat able to receive the cylindrical body steadily.

One example of such fastening devices is disclosed in the US Patent No. 4,118,838 wherein the bearing element has a hollow structure with a base wall from which two opposite side walls and two opposite front walls extend. The receiving seat is defined by respective concavities coaxially developing through the front walls. Internally predisposed, in correspondence of each side walls, is a plurality of anchoring teeth drooping towards the base wall.

The anchoring element, cooperating with the bearing element, exhibits a slightly arched structure from the ends of which respective anchoring, plat-shaped projections extend, each of which is provided with suitable coupling surfaces facing opposite sides. Each coupling surface is provided with a plurality of anchoring teeth, counter-shaped with respect to the anchoring teeth of the side walls of the bearing element so that, once the cylindrical body to be fastened is placed in correspondence of the seat which receives the bearing element, the anchoring element is inserted within the latter as far as to provide a forced joint of the anchoring teeth in question. The said insertion of the locking element is made by progressively fitting its anchoring teeth into the anchoring teeth of the bearing element as far as to press, by the arched structure, the cylindrical body against the seat which receives the bearing element.

Although the known fastening devices allow the installation of cylindrical bodies on supports of any kind, the Applicant has found that they are, however, not without drawbacks, mainly in relation to the disengagement of the fastening element from the bearing element and to the reuse thereof once installed.

In fact, it has been found that the locking element cannot be removed without drastic interventions, such as the breaking of the fastening device, with possible damage of the supported cylindrical body.

The object of the present invention is therefore to propose a device for fastening cylindrical bodies, especially tubes, which device can be disassembled also after the installation thereof.

A furher object of the present invention is to allow the disengagement of cylindrical bodies previously installed while preserving the structural integrity thereof.

These and other objects, which will be evident from the following description, are substantially obtained by a device for fastening cylindrical bodies, especially tubes and cables, in accordance with the appended claims.

Furhter characteristics and advantages will be best understood from the detailed description of one preferred, non-exclusive,embodiment of a device for fastening cylindrical bodies, especially tubes and cables, according to the present invention.

The description is set forth below with reference to the attached drawings given only by way of illustrative and, thus, non-limitative example, wherein:
Fig. 1 is an exploded perspective view of a device for fastening cylindrical bodies, especially tubes and cables, according to a first embodiment of the present invention;
Fig. 2 is another exploded perspective view of the device represented in the preceding figure;
Fig. 3 is an exploded perspective view of the fastening device according to a second embodiment of the present invention;
Fig. 4 is another exploded perspective view of the device represented in the preceding figure;
Fig. 5 is an exploded perspective view of the fastening device according to a third embodiment of the present invention;
Fig. 6 is another exploded perspective view of the device represented in the preceding figure;
Fig. 7 is an exploded view of a tube-fastener provided with a cover's clip;
Figs. 8 and 9 are, respectively, a perspective and a front view of the tube-fastener of Fig. 7 with clip and cover mounted thereon;
Fig. 10 shows a cover associated with the tube-fastener of Figs. 7-9;
Fig. 11 shows a cover associated with two modularly coupled tube-fasteners of Figs. 7-9;
Figs. 12a, 12b, 12c show, respectively, a perspective view, a side view and a perspective view of a tube-fastener, according to the invention, being inserted in a guide channel.

With reference to the attached figures, numeral 1 indicates in the whole a device for fastening cylindrical bodies (not shown), especially tubes and the like, according to the present invention. The device 1 can be used also for supporting channels, electrical cables and similar cylindrical, tubular elements as required.

To enter into detail, the fastening device 1 comprises at least one bearing element 2 having an attachment portion 3 for engaging the device 1 to a respective support (not illustrated) such as, for example, a wall or any other surface able to withstand the load acting thereon. The attachment portion 3 is substantially defined by a base wall 4 having at least one engaging opening 4a through which fastening means (not shown) are free to operate for ensuring the bearing element 2 to the support in question. Extending across the base wall 4, preferably at right angle, are two front walls 5 provided with respective concavities 5a exhibiting a substantially arched profile. The concavities 5a are disposed coaxially and develop substantially like an arc of circle to define a respective receiving seat 6 for engaging the cylindrical body to be borne. Two flanks 7 develop transversely and substantially at right angle from the base 4, opposite to one other and orthogonal to the front walls 5.

As can be seen from the attached figures, the device 1 comprises at least one locking element 8 able to be removably engaged to the bearing element 2 to lock the said cylindrical body at a substantially intermediate position. The locking element 8 has a hollow structure 9 defined by two front walls 10 substantially parallel to each other and exhibiting respective, substantially arched concavities 10a. The concavities 10a are disposed coaxially and develop substantially like an arc of circle to define at least one receiving seat 11 for the engagement of the cylindrical body. The hollow structure 9 has also two flanks 12 substantially parallel to each other and orthogonal to the front walls 10.

The device 1 is also provided with anchoring means 13 operatively interposed between the bearing element 2 and the locking element 8 to keep these elements mutually joined in a coupling position in which the receiving seats 6, 11 lie substantially on a same plane and opposite to each other. When the locking element 8 is engaged to the bearing element 2, the receiving seats 6, 11 encircle, at least partially, the transverse profile of the supported cylindrical body, and the anchoring means 13 remain inside the device 1.

In order to disengage the locking element 8 from the bearing element 2, the anchoring means 13 are made accessible from the outside. In this way, by operating directly on the anchoring means 133, it is possible to separate the bearing elements 2 and locking elements 8 to release the cylindrical body being retained.

To enter into greater detail, the anchoring means 13 comprise at least one anchoring projection 14 provided with a relevant anchoring tooth 15, and at least one anchoring recess 16 provided with at least a respective anchoring tooth 17. The anchoring projection 14 is able to be inserted into the anchoring recess 16, and the anchoring teeth 15, 17 cooperate to maintain such coupling. Preferably, both the anchoring projection 14 and the anchoring recess 16 are provided with a plurality of counter-shaped anchoring teeth 15 and 17 each of which has a sliding profile and a restraint profile. As shown in the attached figures, the anchoring projection 14 is associated with the bearing element 2, in correspondence of a respective flank 7 of the latter, and the anchoring recess 16 is formed inside the locking element 8. The anchoring projection 16 defines an extension of the respective flank 7 to which is engaged and, at least partially, a length of the respective receiving seat 6.

Advantageously, the anchoring recess 16 communicates with at least one functional opening 18 which is accessible from the outside. Preferably, the functional opening 18 is formed across the locking element 8 on the side opposite to that of the anchoring recess 16.

In the solutions illustrated in the attached figures, the anchoring means 13 are provided with two identical anchoring projections 14 disposed in correspondence of the flanks 7 of bearing element 2, and with two like anchoring recesses 16 suitably predisposed in the locking element 8 and having relevant access openings 18.

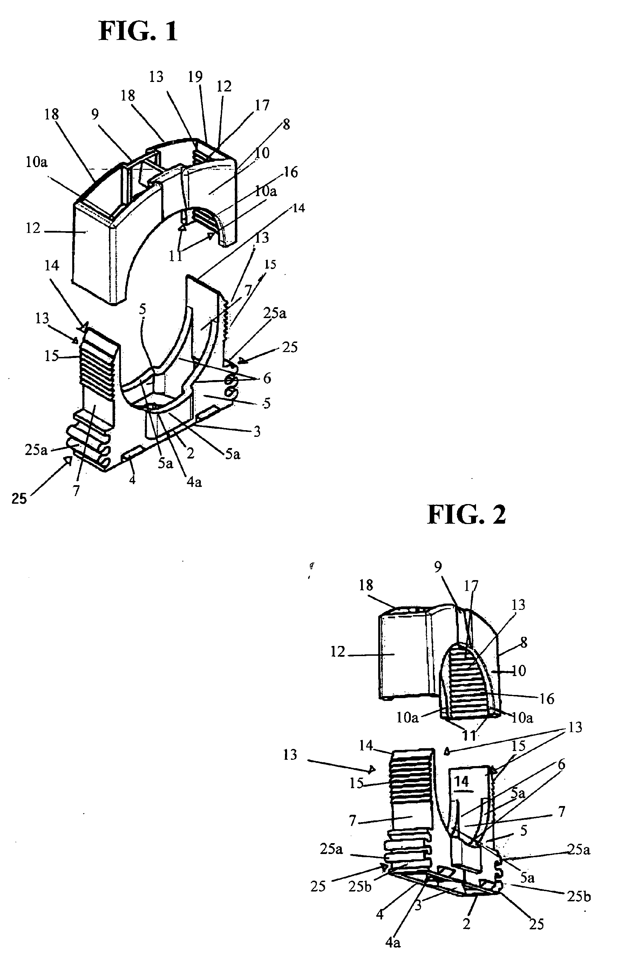

According to a first embodiment of the present invention, as shown in Figs. 1 and 2, the anchoring teeth 15 of each anchoring projection 14 are located on opposite side, with respect to the corresponding receiving seat 6, and the anchoring teeth 17 of each anchoring recess 16 are located on a respective inner surface 19 of the locking element 8 which is in facing relationship with the corresponding receiving seat 11. Each anchoring projection 14 is also movable towards the respective receiving seat 6 to allow the engagement/disengagement of the locking element 8 to/from the bearing element 2. In particular, the engagement of said elements 2, 8 is determined by a forced insertion of said anchoring projections 14 into the respective anchoring recesses 16. The interaction between the anchoring teeth 15, 17 is cause, during the sliding of the inclined profiles, for the movement of the anchoring projections 14 close to each other. On the contrary, the approach of the anchoring projections 14 to each other, forcedly operated through the respective functional openings 18, makes it possible to release the locking element 8 from the bearing element 2.

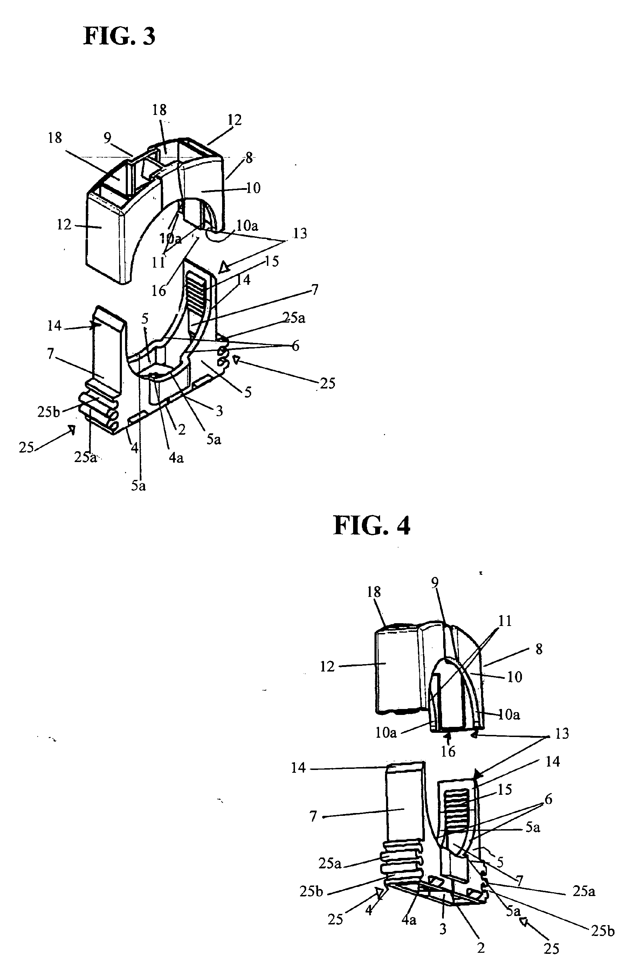

According to a second embodiment of the present invention, as shown in Figs. 3 and 4, the anchoring teeth 15 of each anchoring projection 14 are located on the same side as the corresponding receiving seat 6, and the anchoring teeth 17 of each anchoring recess 16 are located on a respective inner surface of the locking element 8, substantially parallel to the flanks 12 of the latter and located opposite with respect to the corresponding receiving seat 11. Each inner surface which carries the anchoring teeth 15 is preferably movable close to the respective receiving seat 11 to allow the engagement/disengagement of the bearing elements 2 and locking elements 8. In particular, each anchoring recess 16 is defined inside the locking element 8 between the respective inner surface, which is opposite to the receiving seat 11, and the respective flank 12.

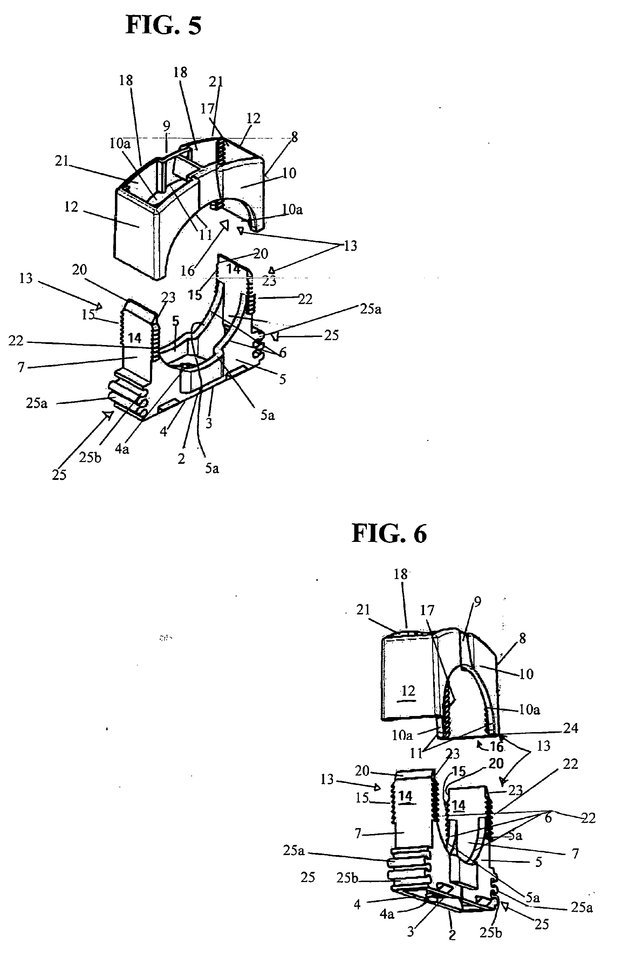

According to a third embodiment of the present invention, as shown in Figs. 5 and 6, the anchoring teeth 15 of each anchoring projection 14 are located on a surface 20 which is substantially parallel to the lying plane of the receiving seat 5, and the anchoring teeth 17 of each anchoring recess 16 are located over an internal surface of the locking element 8, substantially parallel to the lying plane of the respective receiving seat 11 and located opposite with respect to the surface 20 of the relevant anchoring projection 14.

Again with reference to Figs. 5 and 6, each anchoring projection 15 exhibits also a plurality of auxiliary anchoring teeth 22 protruding from a surface 23 opposite to the surface 20 which carries the anchoring teeth 15, while each anchoring recess 16 exhibits respective auxiliary anchoring teeth 24 disposed on an internal surface of locking element 8 facing the surface 21 which carries the respective anchoring teeth 17.

Advantageously, each anchoring projection 14 is movable towards the respective receiving seat 6 to allow the engagement and/or disengagement of bearing elements 2 and locking elements 8. The anchoring teeth 14, 15, 22, 24 of anchoring projections 14 and the anchoring recesses 14, 16, slide relative to each other along the restraint profile in a direction substantially perpendicular to the lying planes of anchoring projections 14.

To facilitate the engagement and/or disengagement operations of the locking element 8 and bearing element 2, these elements are preferably made from a material which is, at least partially, elastically deformable.

The device 1 comprises also coupling means 25 for engagement of at least another device 1 provided with same coupling means 25. The latter comprise a plurality of reliefs 25a interposed between respective grooves 25b formed in correspondence of at least one flank 7 of the bearing element 2 for the axial engagement of corresponding reliefs 25a and grooves 25b of coupling means 25 of device 1 to be engaged.

The present invention overcomes the problems of the prior technique and obtains the proposed objects.

First of all, the present device is able to fasten tubes or similar cylindrical bodies to any support in a practical and simple manner.

Moreover, the accessibility to the anchoring means from the outside makes it possible to remove the installed device without damaging in any way the supported cylindrical body and without breaking the structure of the same device. This characteristic affects very positevely the costs of installation of the cylindrical bodies. In fact, the possibility of reusing the devices relieves the installer of buying further devices when it results necessary to move or remove the ones already installed.

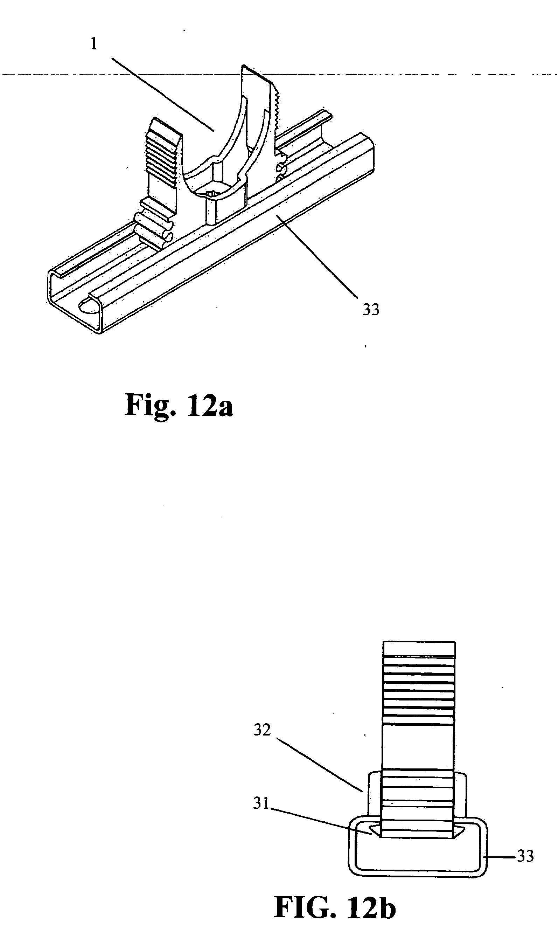

It is stressed - reference being made to Fig. 12 - that the tube-fasteners of the invention can also be provided with lateral protrusions 31, 32 which, besides conferring rigidity to the structure of the tube-fastener (in the case illustrated, the relief 32), allow inserting the latter with precision within suitable channels 33, especially in case of modular assembly of more tube-fasteners 1.

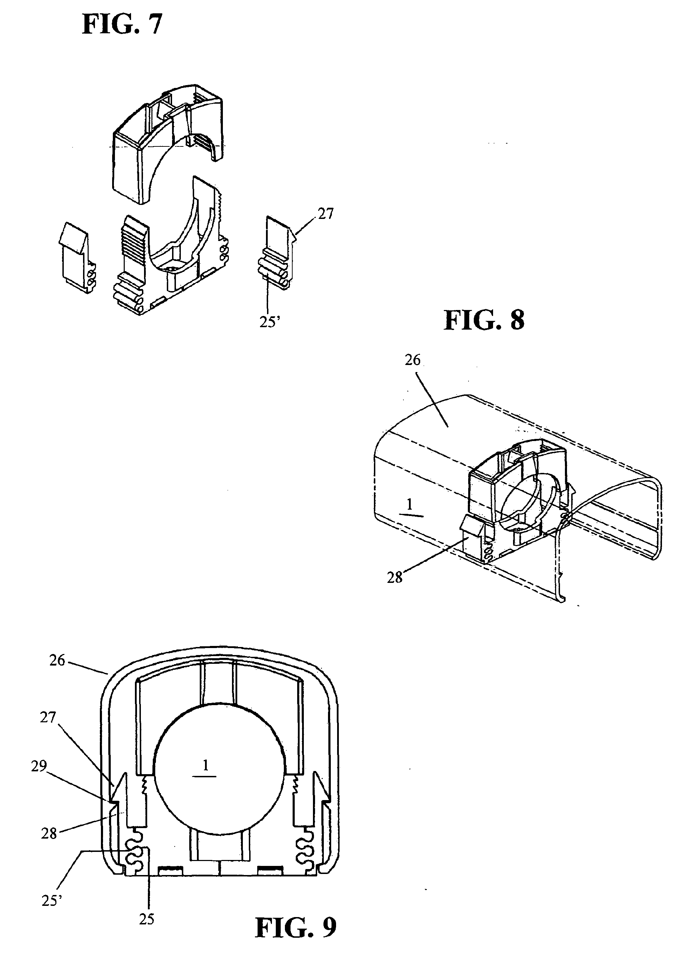

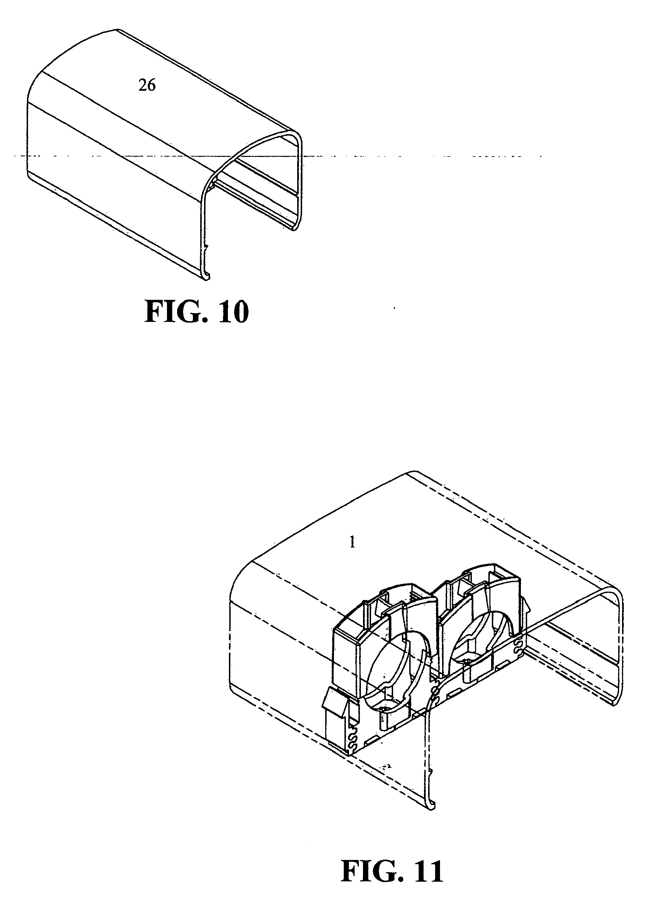

Described here below, reference being made to Figs. 7-11, is a "clip" device for the application of a cover 26 to a tube-fastener 1.

The device comprises at least two spikes 27 with a tongue-shaped portion 28 having longitudinal development and provided with a mounting/dismounting profile 25', corresponding to the above described coupling profiles 25, and located on the tongue's opposite surface of spike 27.

Advantageously, the cover 26 is provided with teeth 29 in meshing relationship with the spikes 27 so as to remain stably engaged therein when superimposing the cover on the tube-fastener 1.

This solution makes it possible to provide covers 26 having width corresponding to one or more modularly associated tube-fasteners 1, and this independently of the shape of profiles 25/25', possibly varying according to models.

The tongues 28 may be applied to the bearing element 2 also in a different way, that is, without any coupling profile, by providing for example a tongue of L-shape with its lower length able to be disposed below the bearing element 2 in order to be fastened, along with the latter, to the external support (a wall, for example) in a traditional fashion, such as by screw.

## Claims

1. Fastening device (1) for cylindrical bodies, especially tubes and cables, comprising:
at least a bearing element (2) having an attachment portion (3) for engaging the said fastening device (1) to a respective support, said bearing element (2) having at least one receiving seat (6) for engaging at least one cylindrical body;
at least one locking element (8) able to be removably engaged to said bearing element (2), said locking element (8) having at least one receiving seat (11) for engaging said cylindrical body;
anchoring means (13) operatively interposed between said bearing elements (2) and locking elements (8) to keep these elements mutually joined in a position in which said receiving seats (6, 11) lie substantially on a same plane, opposite one another, and the anchoring means (13) remain inside the device (1),
**characterized in that** the said anchoring means (13) are accessible from the outside to allow the separation of said bearing elements (2) and locking elements (8).

2. Device according to claim 1, **characterized in that** the said anchoring means (13) comprise:
at least one anchoring projection (14) having at least an anchoring tooth (15);
at least one anchoring recess (16) having at least an anchoring tooth (17), said anchoring projection (14) being insertable within said anchoring recess (16), and said anchoring teeth (15, 17) cooperating with each other to keep said anchoring projection (14) inserted within said anchoring recess (16);
said annchoring recess (16) being in communication with at least one functional opening (18) accessible from the outside.

3. Device according to claim 2, **characterized in that** the said anchoring projection (14) is associated with said bearing element (2), and said anchoring recess (16) is formed inside said locking element (8), said functional opening (18) being formed through said locking element (8) on the side opposite to that of said anchoring recess (16).

4. Device according to claim 3, **characterized in that** the said at least an anchoring tooth (15) of said anchoring projection (14) is disposed on opposite side with respect to the corresponding receiving seat (6), and said at least an anchoring tooth (17) of said anchoring recess (16) is disposed on an internal surface (19) of said locking element (8) facing the corresponding receiving seat (11), said anchoring projection (14) being movable towards the respective receiving seat (6) to allow the disengagement of said bearing elements (2) and locking elements (8).

5. Device according to claim 3, **characterized in that** the said at least an anchoring tooth (15) of said anchoring projection (14) is disposed on the same side as the corresponding receiving seat (6), and said at least an anchoring tooth (17) of said anchoring recess (16) is disposed on an internal surface (19) of said locking element (8) facing the side opposite to the corresponding receiving seat (11), said internal surface of said locking element (8) being movable close to the respective receiving seat (11) to allow the disengagement of said bearing elements (2) and locking elements (8).

6. Device according to claim 5, **characterized in that** the said anchoring recess (16) is defined inside the said locking element (8) between said internal surface, opposite to the receiving seat (11), and a flank (12) of said locking element itself, said anchoring recess (16) being substantially countershaped to said anchoring projection (14).

7. Device according to claim 3, **characterized in that** the said at least an anchoring tooth (15) of said anchoring projection (14) is disposed on a surface (20) substantially parallel to the lying plane of said receiving seat (6), and said at least an anchoring tooth (17) of said anchoring recess (16) is disposed on an internal surface (21) of said locking element (8) substantially parallel to the lying plane of the respective receiving seat (11) and opposite to the surface (20) of said anchoring projection (14) which carries said anchoring tooth (15).

8. Device according to claim 7, **characterized in that**:
said anchoring projection (14) exhibits also at least an auxiliary anchoring tooth (22) protruding from a surface (23) opposite to the surface (20) which carries said anchoring tooth (15);
said anchoring recess (16) exhibits at least an auxiliary anchoring tooth (24) disposed on an internal surface of said locking element (8) facing the surface (21) which carries the respective anchoring tooth (17).

9. Device according to claim 7 or 8, **characterized in that** the said anchoring projection (14) is movable the release of said bearing elements (2) and locking elements (8), said anchoring teeth (15, 17, 22, 24) of said anchoring projection (14) and anchoring recess (16) sliding relative to each other along a direction substantially perpendicular to the lying plane of said anchoring projection (14).

10. Device according to any preceding claims, **characterized in that** it comprises also coupling means (25) for engaging at least a further device provided with same coupling means (25).

11. Device according to claim 10, **characterized in that** the said coupling means (25) exhibit a plurality of reliefs (25a) interposed between a plurality of grooves (25b) for engaging respective reliefs (25a) and respective grooves (25b) of identical coupling means (25) of further fastening devices (1).

12. Device according to any preceding claims, **characterized in that** it also comprises at least two spikes (27) with a tongue-shaped portion (28) having longitudinal development and provided with a mounting/dismounting profile (25') corresponding to a coupling profile (25) of the tube-fastener (1).

13. Device according to claim 12, **characterized in that** it comprises a cover (26) provided with teeth (29) in meshing relationship with spikes (27) so as to remain stably engaged therein and be removable therefrom when superimposing the cover on one or more tube-fasteners (1) modularly coupled.

14. Device according to claim 12 or 13, **characterized in that** the tongues (27) have a height approximately equal to the bearing element (2) and are provided with anchoring teeth (30) intended to give a safer anchorage with a corresponding locking element (8) of tube-fastener (1).

15. Device according to any of claims 12-14, **characterized in that** the tongues (28) are of (L) shape, with the lower length thereof being able to be disposed below the bearing element (2) to be fixed together with the latter to the external support.

16. Device according to any preceding claims, **characterized in that** it comprises also at least two spikes (27) with a tongue-shaped portion (28) having longitudinal development and provided with a mounting/dismounting profile (25') corresponding to a coupling profile (25) of the tube-fastener (1).

17. Cover kit for tube-fasteners, **characterized in that** it comprises at least two spikes (27) each having a tongue-shape (28) having longitudinal development and provided with lateral mounting/dismounting means (25') in the flanks of a tube-fastener (1), and a cover (26) provided with teeth (29) in meshing relationship with the spikes (27) so as to remain stably engaged therein and be removable therefrom when superimposing the cover on one or more tube-fasteners (1) modularly coupled side-by-side.

18. Kit according to claim 17, **characterized in that** the said means for mounting/dismounting the tongues (27) are made up of profiles providing a restrained joint with corresponding profiles of one or more tube-fasteners (1).

19. Kit according to any of claims 17-18, **characterized in that** the tongues (28) are of (L) shape, with the lower length thereof being able to be disposed below a bearing element (2) of a tube-fastener (1).
